# EUROPEAN PATENT SPECIFICATION

(11) **EP 1 867 779 B1**
(45) Date of publication and mention of the grant of the patent: **11.04.2012**
(21) Application number: 06713187.0
(22) Date of filing: 07.02.2006
(51) Int. Cl.: D06N 3/00, D04H 13/00, B32B 5/26

(54) **ARTIFICIAL LEATHER AND BASE THEREFOR, AND PROCESSES FOR PRODUCTION OF BOTH**
KUNSTLEDER UND GRUNDLAGE DAFÜR UND HERSTELLUNGSVERFAHREN FÜR BEIDES
CUIR ARTIFICIEL, SA BASE ET LEURS PROCEDES DE FABRICATION

(30) Priority: 08.02.2005 JP 2005031255
(43) Date of publication of application: 19.12.2007
(73) Proprietor: Tradik Co., Ltd., Kyoto-shi, Kyoto 616-8002 (JP)
(72) Inventor: OKADA, Hozuma, to-shi, Kyoto, 6168002 (JP)
(74) Representative: Vossius & Partner
(86) International application number: PCT/JP2006/302044
(87) International publication number: WO 2006/085522

(56) References cited:
- JP-A- 06 280 145
- JP-A- 11 269 774
- JP-A- 55 093 881
- JP-A- 59 009 279
- JP-A- 2003 013 369
- "JIS L 1059-1, translation into English", 22 June 2009 (2009-06-22), Japanese Standards Association
- "Encyclopedia of fibers", 2002, Maruzen Co., JP * partial translation into English *

## Description

The present invention relates to an artificial leather and a substrate used for the artificial leather, and is suitably applicable to a grain leather for bags, shoes, etc. or a suede leather for clothing, chairs, etc.

To achieve an artificial leather that feels like natural leather, Patent Document 1 proposes a method for producing an artificial leather in which a papermaking sheet made of fine fibers (0.56 decitex (0.5 denier or less)) and another papermaking fiber sheet are laminated with a knitted fabric sandwiched between them, and the laminate is subjected to hydroentanglement and then filled with an elastic polymer such as polyurethane. The artificial leather thus produced has an apparent density of 0.15 g/cm³ or more on the surface side and an apparent density of less than 0.15 g/cm³ on the back side. Patent Document 2 proposes a sheet that includes a non-woven fabric and a polyurethane binder and is characterized by a density gradient in its thickness direction. Patent Documents 3 and 4 propose a substrate for grain artificial leather that is formed so that the fineness is larger in the upper layer than in the lower layer.

Patent Document 1: JP 55(1980)-93881 A
Patent Document 2: JP 6(1994)-280145 A
Patent Document 3: JP 11(1999)-269774 A
Patent Document 4: JP 2003-13369 A

### Problem to be Solved by the Invention

In the artificial leather of Patent Document 1, however, the density of a group of fibers in the lower layer is extremely low. Therefore, the artificial leather gives little satisfaction, lacks elasticity and tightness, and cannot be applied to a grain leather. Even if the artificial leather is used for suede, it is still a long way from the texture of natural leather. In Patent Document 2, the non-woven fabric is produced, hot-pressed, and then impregnated with two types of polyurethane so as to create a density gradient. However, this method involves a troublesome process such as hot pressing. Moreover, unlike the natural leather structure with a fineness gradient, the sheet of Patent Document 2 cannot have elasticity and tightness that are the distinctive features of natural leather. In Patent Documents 3 and 4, two lines of an opening device and a carding machine as well as a plant site covering a large area are necessary to form the substrate including two layers with different finenesses. In addition, the barb depth of needles is limited to prevent the fibers on the other side from sticking out of the surface, and thus the entanglement performance is reduced. Therefore, to provide the strength required for commercialization, the number of entanglements, actually the number of needles or times the web passes through the line should be many times larger than usual. Accordingly, the production method is neither reasonable nor economical.
Therefore, the problem addressed by the present invention is to provide an artificial leather with a texture that is very similar to a natural leather texture and also a substrate used for the artificial leather at low cost.

To solve the above problem, a substrate for artificial leather of the present invention includes the following: an upper layer that has a density of 0.30 to 0.45 g/cm³ and includes a group of fibers having a fineness of 1.1 decitex (1 denier) or less, a fiber length of 3 to 15 mm, and a basis weight of 20 to 150 g/m² and an elastic polymer impregnated into the group of fibers; a fiber bundle layer that has a density of 0.25 to 0.35 g/cm³ and includes fibers having a fineness of 1.1 decitex (1 denier) or more and a fabric having an air permeability of 3 to 250 cm³/cm²·sec based on JIS (Japanese Industrial Standards) L 1096 Method A; and a lower layer that has a density lower than that of the upper layer and in the range of 0.20 to 0.35 g/cm³ and includes a group of fibers having a fineness greater than that of the upper layer, a fiber length of 5 to 25 mm,
and a basis weight of 50 to 200 g/m² and an elastic polymer impregnated into the group of fibers. The upper layer, the fiber bundle layer, and the lower layer are laminated and entangled with one another.

Commonly used natural leather is mainly the dermis of dermal tissue of a cow or the like. The dermis includes a "papillary layer" and a "reticular layer". The papillary layer is adjacent to the epidermis and is densely filled with fine collagen fiber bundles. The reticular layer accounts for about 90% of the dermis and consists of thicker collagen fiber bundles that branch irregularly and are entangled organically and three-dimensionally. The collagen fiber bundles become thicker and lower in density as they go from the papillary layer to the lower portion of the reticular layer. In addition to such fineness and density gradients, a fiber bundle layer in which the fiber bundles are oriented parallel to the surface as a whole, compared to the fiber bundles in the upper and lower layers, is present in the middle of the dermis. This layered structure is considered to make the feel of elasticity and tightness
The substrate of the present invention closely resembles natural leather in structure as described above, and therefore can have physical properties that are very similar to those of natural leather.

An appropriate method for manufacturing the substrate of the present invention includes the following: laminating an upper layer web, a fabric, and a lower layer web in the indicated order; subjecting the resultant laminate to hydroentanglement to form a non-woven fabric; and impregnating the non-woven fabric with an elastic polymer solution. The upper layer web is obtained by wet papermaking and drying, and includes a group of fibers having a fineness of 1.1 decitex (1 denier) or less, a fiber length of 3 to 15 mm, and a basis weight of 20 to 150 g/m² and a water-soluble polymer. The fabric includes fibers having a fineness of 1.1 decitex (1 denier) or more and has an air permeability of 3 to 250 cm³/cm²·sec based on JIS L 1096 Method A. The lower layer web is obtained by wet papermaking and drying, and includes a group of fibers having a fineness greater than that of the upper layer web, a fiber length of 5 to 25 mm, and a basis weight of 50 to 200 g/m² and a water-soluble polymer filled into the lower layer web at a density higher than that of the upper layer web.

According to this method, the fibers in each of the upper and lower layers are entangled with the fabric during the hydroentanglement, and thus the upper layer and the lower layer are bonded together. The filling density of the water-soluble polymer is higher in the lower layer web than in the upper layer web. Therefore, the elastic polymer solution is impregnated to a greater extent into the upper layer web than into the lower layer web after the hydroentanglement. The water-soluble polymer is dissolved and removed by the subsequent washing with hot water, dyeing, or the like. The elastic polymer and the fibers in each layer are maintained in a non-bonded state due to the presence of the water-soluble polymer that has been filled into the layers before the elastic polymer. Consequently, the density of the upper layer becomes relatively higher than that of the lower layer, and the substrate for artificial leather as described above can be provided while ensuring the softness. Since the dried webs are laminated and subjected to hydroentanglement, the feed speed in the papermaking process need not coincide with the processing speed in the entanglement process. Moreover, the dried webs can be also stored in preparation for an order.
If the air permeability of the fabric interposed between the upper and lower layer webs is less than 3 cm³/cm²·sec, it is difficult to integrate the upper and lower layer webs with the fabric. If the air permeability is more than 250 cm³/cm²·sec, the intended elasticity and tightness of natural leather cannot be obtained even with the use of a fiber bundle layer derived from a fabric. Alternatively, if the intended elasticity and tightness are achieved, the upper and the lower layer webs cannot be integrated with the fabric, and the necessary strength is not likely to be obtained.

The present invention can provide an artificial leather with properties that are very similar to those of natural leather. Thus, customers can take pleasure in possessing or putting on products that feel like natural leather without bearing the economic burden.

As the water-soluble polymer, two types of water-soluble polymers, i.e., one having a relatively low dissolution temperature (DL) in water and a relatively low redissolution temperature (RL) in water and the other having a relatively high dissolution temperature (DH) in water and a relatively high redissolution temperature (RH) in water can be used at the same time. The redissolution temperature is generally 20 to 40°C lower than the dissolution temperature. In this case, the water-soluble polymer DL functions as a binder for primary fibers during the papermaking process, and most of it is dissolved or removed by the hydroentanglement. On the other hand, when the hydroentanglement is performed at a temperature of not more than DL (and preferably not less than RL), the water-soluble polymer DH remains even after the hydroentanglement, and thus can ensure the non-bonded state of the primary fibers and the elastic polymer while the non-woven fabric is impregnated with the elastic polymer solution. The water-soluble polymer DH is removed by washing with hot water at a temperature of not less than RH after the impregnation of the non-woven fabric with the elastic polymer solution.
When the water-soluble polymer DL is used, it is preferable that before performing the hydroentanglement, the laminate is immersed in a water bath at approximately the same temperature or more as the water temperature of the hydroentanglement. Since the water-soluble polymer DL starts to dissolve in the water bath and loses the binder function, the entanglement performance of the primary fibers is enhanced. Moreover, the releasability of the non-woven fabric from a dryer in the subsequent drying process is improved. Thus, dirt is not likely to be attached, and the softness of the non-woven fabric is also improved.

The upper layer preferably includes a surface layer and an inner layer lying under the surface layer. In such a case, the surface layer may have a density of 0.35 to 0.45 g/cm³ and include a group of fibers having a fineness of 1.1 decitex (1 denier) or less, a fiber length of 3 to 10 mm, and a basis weight of 20 to 100 g/m² and an elastic polymer impregnated into the group of fibers. The inner layer may have a density lower than that of the surface layer and in the range of 0.30 to 0.40 g/cm³ and include a group of fibers having a fineness not less than that of the surface layer, a fiber length of 3 to 15 mm, and a basis weight of 30 to 150 g/m² and an elastic polymer impregnated into the group of fibers. It is preferable that the fineness of the surface layer web is 0.056 decitex (0.05 denier) or more in view of the papermaking productivity and is 0.67 decitex (0.6 denier) or less in view of the surface smoothness. Moreover, the fineness of the lower layer web is preferably 2 to 10 times that of the surface layer web.
As described above, to provide the substrate with a density gradient, it is preferable that the non-woven fabric has a density gradient so that the density of the group of fibers in the surface layer is 0.18 to 0.30 g/cm³, the density of the group of fibers in the inner layer is 0.15 to 0.25 g/cm³, and the density of the group of fibers in the lower layer is 0.15 to 0.23 g/cm³.
The fibers constituting the group of fibers can be polyester such as PET and synthetic fibers such as nylon and acryl. The water-soluble polymer can be polyvinyl alcohol. The elastic polymer can be polyurethane.

Instead of the water-soluble polymer DL, a part of the group of fibers in each web may be composed of fibers with a low softening point and may be used as a binder for the primary fibers. In other words, at least one of the groups of fibers in the upper and lower layer webs may include 70 parts or more of primary fibers having a relatively high softening point SH and secondary fibers having a relatively low softening point SL as the rest, and the drying process after the wet papermaking process may be performed at a temperature between SL and SH. This allows the secondary fibers to function as a binder in the drying process, and a web is provided. Moreover, the secondary fibers remain even after the hydroentanglement, and thus can function similarly to the primary fibers in the substrate for artificial leather.
As a combination of the primary fibers and the secondary fibers, when the primary fibers are PET, the secondary fibers can be undrawn PET, sheath-core bicomponent fibers (core: PET and sheath: copolymer PET with 5-sodium sulfoisophthalate), or sheath-core bicomponent fibers (core: polypropylene and sheath: polyethylene). These secondary fibers are insoluble in water, and therefore a paper machine or the like is less susceptible to dirt, improving both the quality stability and the working efficiency. Moreover, since the secondary fibers do not dissolve during the hydroentanglement, the equipment such as an entanglement machine does not become soiled, and water can be recycled easily.

It is preferable that the fabric has the following physical properties: a bending resistance indicated by the average of the values in the longitudinal and lateral directions based on JIS L 1096 8.19 Method A (1 mm thickness conversion) is 30 mm or more; and an elastic recovery ratio at a load of 10N measured by a Monsanto method based on JIS L 1059-1 is 50% or more. When the fabric has a bending resistance of 45 mm or more and an elastic recovery ratio of 75% or more, the artificial leather to be produced resembles cowhide. Examples of the fabric include a triaxial woven fabric, a plain weave fabric, and a spun bond. Among them, for an artificial leather that is thick, elastic, and similar to cowhide used for bags or shoes, a plain weave fabric using a hollow yarn and a polyurethane spun bond (e.g., ESPANSIONE (registered trade mark) manufactured by Kanebo Inc.) are suitable.
The substrate for artificial leather of the present invention can be a suede-like artificial leather by napping the surface of the upper layer, and also can be a grain artificial leather by boding a sheet that includes polyurethane as the main component to the surface of the upper layer. Examples

The term "fiber" indicates a drawn polymer when used simply in the following examples.

### Example 1

### [Production of a substrate for artificial leather]

95 parts of polyester fibers (manufactured by Teijin Limited) having a fineness of 0.17 decitex (0.15 denier) and a fiber length of 5 mm and 5 parts of PVA fibers (referred to as "VPW" in the following) having a dissolution temperature in water of 60°C, a fineness of 1.1 decitex (1.0 denier), and a fiber length of 3 mm were dissolved in 50000 parts of water at ordinary temperatures, and a 1% nonionic dispersant and 0.1% polyacrylamide (a thickening agent) were added so as to improve the dispersibility of the fibers, thus providing a first slurry for papermaking.
90 parts of polyester fibers (manufactured by Teijin Limited) having a fineness of 0.33 decitex (0.3 denier) and a fiber length of 6 mm, 5 parts of VPW, and 5 parts of PVA fibers (referred to as "VPB" in the following) having a dissolution temperature in water of 99°C, a fineness of 1.1 decitex (1.0 denier), and a fiber length of 5 mm were dissolved and dispersed in the same manner as the first slurry, thus providing a second slurry for papermaking.
80 parts of polyester fibers (manufactured by Teijin Limited) having a fineness of 1.1 decitex (1.0 denier) and a fiber length of 10 mm, 5 parts of VPW, and 15 parts of VPB were dissolved and dispersed in the same manner as the first slurry, thus providing a third slurry for papermaking.

The first, second, and third slurries were formed into a surface layer web with a dry weight (basis weight) of 30 g/m², an inner layer-web with a dry weight (basis weight) of 30 g/m², and a lower layer web with a dry weight (basis weight) of 50 g/m² by papermaking using an inclined-type paper machine, respectively.
On the other hand, a polyester plain weave fabric (D-1) using a 83.3 decitex (75 denier) 24 filament yarn (monofilament fineness: 3.472 decitex (3.125 denier)) and having a weaving density of 68 warps/inch and 58 wefts/inch, an air permeability of 141 cm³/cm²·sec, a bending resistance (longitudinal/lateral) of 34 mm/37 mm (the terms "longitudinal/lateral" and "mm" will be omitted in the following), and an elastic recovery ratio of 84% was prepared.
The surface layer web, the inner layer web, the plain weave fabric (D-1), and the lower laver web were laminated in this order from the top, and then subjected to hydroentanglement at ordinary temperatures by applying water jets alternately to the surface and the back of the laminate while varying the injection pressure in the range of 9.8 x 10⁵ Pa to 1.18 x 10⁷ Pa (10 kg/cm² to 120 kg/cm²) Thus, a non-woven fabric (X-1) was produced.

Next, the non-woven fabric (X-1) was impregnated with a solution containing 13 parts by weight of a composition composed mainly of polyester polyurethane, 86.6 parts by weight of an organic solvent DMF, and 0.4 parts by weight of a coagulation adjusting agent. After the polyurethane was coagulated in a 30% DMF aqueous solution at 28°C, the non-woven fabric (X-1) was washed with water and further with hot water at 80°C or more, and was dried, resulting in a substrate (Y-1) for artificial leather. The substrate (Y-1) thus obtained had a thickness of 0.61 mm and a weight of 203 g/m². Table 1 shows the weight of each layer of the substrate (Y-1), the density of a group of fibers in each layer, and the density of each layer calculated from the thickness.

**TABLE 1**

| | Weight | | | Density of fibers g/cm³ | Thickness mm | Density of layer g/cm³ |
|---|---|---|---|---|---|---|
| | ①PET g/m² | ②PU g/m² | ①+② g/m² | | | |
| Surface layer | 28.5 | 16 | 44.5 | 0.238 | 0.12 | 0.371 |
| Inner layer | 27 | 14 | 41 | 0.225 . | 0.12 | 0.342 |
| Fiber bundle layer | 50 | 9 | 59 | 0.278 | 0.18 | 0.328 |
| Lower layer | 40 | 18.5 | 58.5 | 0.211 | 0.19 | 0.308 |
| Total | 145.5 | 57.5 | 203 | | 0.61 | 0.330 |

### [Production of artificial leather with grain finish]

The substrate (Y-1) was sent to a belt sander type buffing machine (A-5N manufactured by MEINAN MACHINERY WORKS, INC.), and the surface (on the surface layer web side) and the back (on the lower layer web side) of the substrate (Y-1) were buffed with a mesh paper (No. 240) at a rotational speed of 600 m/min to form a napped surface on both sides. Subsequently, the substrate (Y-1) was subjected to a relaxation treatment in hot water using a jet dyeing machine (CUT-SR-2L manufactured by HISAKA WORKS, LTD.) and was dried.
On the other hand, a composition was prepared by blending 100 parts of polyurethane, 28 parts of carbon black, and 35 parts of DMF. The polyurethane was obtained by polymerization of polycarbonate diol, polytetramethylene glycol, polyethylene glycol, and 4,4'-dicyclohexanemethane diisocyanate. The composition was applied to a release paper in an amount of 125 g/m². As an adhesive layer, a liquid mixture containing 100 parts of two-component polyurethane, 10 parts of a crosslinking agent, 1.5 parts of a crosslinking accelerator, and 20 parts of a solvent was applied to the surface of the composition in an amount of 155 g/m². This film was press-bonded to the surface of the substrate (Y-1) after the relaxation treatment while the adhesive layer had adhesion properties immediately after being dried. The resultant substrate (Y-1) was allowed to stand at 60°C for 48 hours, and then the release paper was removed, thereby producing a grain artificial leather (Z-1). The artificial leather (Z-1) was further subjected to a rubbing process, so that it exhibited not only softness, but also elasticity and tightness that had never been achieved before. Accordingly, the artificial leather (Z-1) felt like natural leather and was suitable for clothing.

### Example 2

Instead of the plain weave fabric (D-1) in Example 1, a polyester plain weave fabric (D-2) using a 83.3 decitex (75 denier) 36 filament yarn (monofilament fineness: 2.31 decitex (2.08 denier), a hollow yarn with a hollow ratio of 20%) and having a weaving density of 68 warps/inch and 59 wefts/inch, an air permeability of 152 cm³/cm²·sec, a bending resistance of 53/47, and an elastic recovery ratio of 89% was prepared.
Like Example 1, the surface layer web, an upper layer web, the plain weave fabric (D-2), and the lower layer web were laminated in this order from the top, and then subjected to hydroentanglement. Thus, a non-woven fabric (X-2) was produced. Subsequently, the non-woven fabric (X-2) underwent the same processes as Example 1, resulting in a substrate (Y-2) for artificial leather. The substrate (Y-2) thus obtained had a thickness of 0.62 mm and a weight of 207 g/m². Thereafter, the grain finish was performed in the same manner as Example 1, except that the substrate (Y-2) was used instead of the substrate (Y-1), thereby producing a grain artificial leather (Z-2).
The artificial leather (Z-2) was superior in both elasticity and tightness, and also had excellent quality for shoes, particularly for ladies' shoes, and bags.

### Comparative evaluation

Comparing the artificial leathers (Z-1) and (Z-2) with various natural leathers and commercially available artificial leathers, softness, tightness, elasticity, bending resistance, resilience, and 10% modulus were evaluated. Among these items, the softness, the tightness, and the elasticity were evaluated by a total of twenty panelists: five from natural leather specialists such as members of the leather industrial research institute, five from synthetic leather manufacturers, and ten from the general public. In this case, the softness, tightness, and elasticity of a natural leather for shoes were defined as 3, respectively. Based on these values, each of the panelists gave 5 when they judged that the leather to be evaluated had better softness, tightness, and elasticity than those of the natural leather for shoes, and gave 1 when they judged that the leather to be evaluated was inferior in its softness, tightness, and elasticity. If the panelists judged that the above properties of the leather to be evaluated were at an intermediate level, they would give 2 or 4.
Table 2 shows the results of the evaluation. In Table 2, each value of softness, tightness, and elasticity is the average of the scores given by the twenty panelists. The bending resistance is indicated by the average of the values in the longitudinal and lateral directions.

**TABLE 2**

| | Natural leather for shoes | Natural leather calf | Commercial grain artificial leather | Ex. 1 Z-1 | Ex. 2 Z-2 |
|---|---|---|---|---|---|
| Thickness m/m | 1.35 | 0.80 | 1.40 | 0.76 | 0.78 |
| Softness | 3.0 | 3.4 | 4.3 | 3.1 | 3.1 |
| Tightness | 3.0 | 3.4 | 1.6 | 3.2 | 3.3 |
| Elasticity (intrinsic resilience) | 3.0 | 3.2 | 1.2 | 3.1 | 3.3 |
| Cantilever bending resistance m/m (JIS L 1096 8.19 Method A) | 61 | 46 | 37 | 45 | 49 |
| 1 m/m thickness conversion | 45.0 | 57.5 | 26.4 | 59.2 | 62.8 |
| Resilience JIS L 1059-1, at a load of 10N (crease recovery angle) | 121° | 107° | 74° | 96° | 104° |
| Recovery ratio | 67% | 59% | 41% | 53% | 58% |
| 10% modulus Pa (kgf/mm²) 1 m/m thicknes conversion Pa (kgf/mm²) | 1.76 (0.18) | 0.88 (0.09) | 0.88 (0.08) | 0.69 (0.07) | 0.88 (0.08) |
| | 1.303 (0.133) | 1.107 (0.113) | 0.559 (0.057) | 0.902 (0.092) | 1.009 (0.103) |

### Example 3

The non-woven fabric (X-1) of Example 1 was subjected to a relaxation treatment in hot water and was dried. Then, 100 parts by weight of the non-woven fabric (X-1) was impregnated with 160 parts by weight of a 5 wt% PVA solution and was dried.
Thereafter, the non-woven fabric (X-1) was subjected to sanding by using 400-mesh sandpaper for the surface and 240-mesh sandpaper for the back. The surface was coated with a 22 wt% mixed aqueous solution of PVA and CMC (carboxymethyl cellulose) and was dried. Next, the non-woven fabric (X-1) was impregnated with a 15% DMF solution of polyether polyurethane elastomer. After the polyurethane was coagulated in a 20% DMF aqueous solution, the non-woven fabric (X-1) was sufficiently washed with hot water, so that the PVA fibers, the PVA fabric size, and CMC were dissolved and removed. Subsequently, the substrate thus obtained was dyed with a disperse dye at 130°C for 60 minutes, followed by reduction cleaning. The substrate was dried, and then the surface was brushed, thereby producing an extremely elegant suede-like artificial leather (Z-3). The artificial leather (Z-3) was suitable for clothing.

### Example 4

A suede-like artificial leather (Z-4) with superior elasticity and tightness was produced in the same manner as Example 3, except that the non-woven fabric (X-2) was used instead of the non-woven fabric (X-1). Although it looked like suede, the artificial leather (Z-4) was suitable for high-quality bags and shoes or chair upholstery.

### Example 5

The non-woven fabric (X-1) of Example 1 was subjected to sanding in the same manner as Example 3. Then, the non-woven fabric (X-1) was impregnated with a solution containing 8 wt% of polyether nonionic aqueous polyurethane, 4 wt% of a heat sensitizer, 1 wt% of an antioxidant, and water as the rest and was dried. Subsequently, the substrate thus obtained was dyed with a disperse dye at 130°C for 60 minutes, followed by reduction cleaning. The substrate was dried, and then the surface was brushed, thereby producing an extremely elegant suede-like artificial leather (Z-5). The artificial leather (Z-5) was suitable for clothing.

### Example 6

The non-woven fabric (X-2) of Example 1 was subjected to sanding in the same manner as Example 3. Then, the non-woven fabric (X-2) was impregnated with a solution containing 8 wt% of polyether nonionic aqueous polyurethane, 4 wt% of a heat sensitizer, 1 wt% of an antioxidant, and water as the rest and was dried. Subsequently, the substrate thus obtained was dyed with a disperse dye at 130°C for 60 minutes, followed by reduction cleaning. The substrate was dried, and then the surface was brushed, thereby producing an extremely elegant suede-like artificial leather (Z-6). The artificial leather (Z-6) was suitable for clothing, high-quality bags, and chair upholstery.

### Example 7

85 parts of polyester fibers (manufactured by Teijin Limited) having a fineness of 0.17 decitex (0.15 denier) and a fiber length of 5 mm and 15 parts of polyester fibers (manufactured by Teijin Limited) having a fineness of 0.22 decitex (0.20 denier) and a fiber length of 3 mm were dissolved in water at ordinary temperatures, and a dispersant etc. were added so as to improve the dispersibility of the fibers, thus providing an upper layer slurry for papermaking.
80 parts of polyester fibers (manufactured by Teijin Limited) having a fineness of 1.1 decitex (1.0 denier) and a fiber length of 10 mm, 5 parts of VPW (which was the same as that of Example 1), and 15 parts of VPB (which was the same as that of Example 1) were dissolved and dispersed in the same manner as the upper layer slurry, thus providing a lower layer slurry for papermaking.
The upper layer slurry and the lower layer slurry were formed into an upper layer web with a dry weight (basis weight) of 100 g/m² and a lower layer web with a dry weight (basis weight) of 80 g/m² by papermaking using an inclined-type paper machine, respectively. On the other hand, a polyester plain weave fabric (D-3) using a 166.7 decitex (150 denier) 36 filament yarn (monofilament fineness 4.63 decitex (4.17 denier) and having a weaving density of 46 warps/inch and 54 wefts/inch, an air permeability of 47 cm³/cm²·sec, a bending resistance of 37/40, and an elastic recovery ratio of 89% was prepared.

Like Example 1, the upper layer web, the plain weave fabric (D-3), and the lower layer web were laminated in this order from the top, and then subjected to hydroentanglement by applying water jets alternately to the surface and the back of the laminate while varying the injection pressure in the range of 9.8 x 10⁵ Pa to 2.16 x 10⁷Pa (10 kg/cm² to 220 kg/cm²). Thus, a non-woven fabric (X-3) was produced.
Subsequently, the non-woven fabric (X-3) underwent the same processes as Example 1, resulting in a substrate (Y-3) for artificial leather. The substrate (Y-3) thus obtained had a thickness of 1.10 mm and a weight of 375 g/m². Table 3 shows the weight of each layer of the substrate (Y-3), the density of a group of fibers in each layer, and the density of each layer calculated from the thickness.

**TABLE 3**

| | Weight | | | Density of fibers g/cm³ | Thickness mm | Density of layer g/cm³ |
|---|---|---|---|---|---|---|
| | ①PET g/m² | ②PU g/m² | ①+② g/m² | | | |
| Upper layer | 100 | 43 | 143 | 0.256 | 0.39 | 0.362 |
| Fiber bundle layer | 122 | 18 | 140 | 0.305 | 0.40 | 0.350 |
| Lower layer | 64 | 26 | 90 | 0.206 | 0.31 | 0.290 |
| Total | 286 | 89 | 375 | | 1.10 | 0.336 |

The grain finish was performed in the same manner as Example 1, except that the substrate (Y-3) was used instead of the substrate (Y-1), thereby producing an artificial leather (Z-7) with a thickness of 1.17 mm. The artificial leather (Z-7) was superior in both elasticity and tightness, had the texture close to natural leather, and also had lightweight excellent quality for shoes.

### Example 8

### [Production of a substrate for artificial leather]

90 parts of polyester fibers (manufactured by Teijin Limited) having a fineness of 0.11 decitex (0.1 denier) and a fiber length of 3 mm, 4 parts of VPW, and 6 parts of VPB were dissolved in water, and a 1% nonionic dispersant and 0.1% polyacrylamide were added in the same manner as Example 1, thus providing a first slurry for papermaking.
85 parts of polyester fibers (manufactured by Teijin Limited) having a fineness of 0.33 decitex (0.3 denier) and a fiber length of 3 mm, 4 parts of VPW, and 11 parts of VPB were dispersed in the same manner as the first slurry, thus providing a second slurry for papermaking.
80 parts of polyester fibers (manufactured by Teijin Limited) having a fineness of 0.67 decitex (0.6 denier) and a fiber length of 5 mm, 4 parts of VPW, and 16 parts of VPB were dispersed in the same manner as the first slurry, thus providing a third slurry for papermaking.
75 parts of polyester fibers (manufactured by Teijin Limited) having a fineness of 1.78 decitex (1.6 denier) and a fiber length of 5 mm, 5 parts of VPW, and 20 parts of VPB were dispersed in the same manner as the first slurry, thus providing a fourth slurry for papermaking.

The first, second, third, and fourth slurries were formed into a surface layer web with a dry weight (basis weight) of 30 g/m², an inner layer web with a dry weight (basis weight) of 30 g/m², a lower layer web for (X-4) with a dry weight (basis weight) of 60 g/m², and a lower layer web for (X-5) with a dry weight (basis weight) of 60 g/m² by papermaking using an inclined-type paper machine, respectively.
On the other hand, the polyester plain weave fabric (D-1) used in Example 1 was prepared.
The surface layer web, the inner web, the plain weave fabric (D-1), and one of the lower layer webs were laminated in this order from the top, and then subjected to hydroentanglement at ordinary temperatures by applying water jets alternately to the surface and the back of the laminate while varying the injection pressure in the range of 9.8 x 10⁵ Pa to 1.57 x 10⁷ Pa (10 kg/cm² to 160 kg/cm²). Thus, a non-woven fabric (X-4) and a non-woven fabric (X-5) were produced.

Next, as with the production of the substrate (Y-1) for artificial leather from the non-woven fabric (X-1) in Example 1, the non-woven fabrics (X-4) and (X-5) were impregnated with a polyurethane solution, coagulated, washed with water and further with hot water (85°C), and dried, resulting in substrates (Y-4) and (Y-5) for artificial leather, respectively. Table 4 shows the weight of each layer of the substrates (Y-4) and (Y-5), and the density of each layer calculated from the thickness.
For each of the substrates (Y-4) and (Y-5), the grain finish was performed under the same conditions as Example 1, thereby producing grain artificial leathers (Z-8) and (Z-9). The artificial leathers (Z-8) and (Z-9) were evaluated under the same conditions as the artificial leather (Z-1). Table 7 shows the results of the evaluation. As is evident from the comparison between the values in Table 7 and the values of the natural leathers in Table 2, both the artificial leathers (Z-8) and (Z-9) had a high bending resistance and a high elastic recovery ratio, and also had the same texture as that of natural leather.

**TABLE 4**

| | | Weight | | | Density of fibers g/cm³ | Thickness mm | Density of layer g/cm³ |
|---|---|---|---|---|---|---|---|
| | | ①PET g/m² | ②PU g/m² | ①+② g/m² | | | |
| Surface layer | | 27.0 | 18.0 | 45.0 | 0.225 | 0.120 | 0.360 |
| Inner layer | | 25.5 | 17.0 | 42.5 | 0.182 | 0.140 | 0.304 |
| Fiber bundle layer | | 50.0 | 8.5 | 58.5 | 0.263 | 0.190 | 0.308 |
| Lower layer | (X-4) | 48.0 | 20.0 | 68.0 | 0.178 | 0.270 | 0.252 |
| | (X-5) | 45.0 | 21.0 | 66.0 | 0.164 | 0.260 | 0.254 |
| Total | (X-4) | 150.5 | 63.5 | 214.0 | | 0.720 | 0.297 |
| | (X-5) | 147.5 | 64.5 | 212.0 | | 0.710 | 0.291 |

### Comparative Example 1

A polyester plain weave fabric (D-4) using a 33.3 decitex (30 denier) 36 filament yarn (monofilament fineness: 0.92 decitex (0.83 denier) and having a weaving density of 96 warps/inch and 66 wefts/inch, an air permeability of 313 cm³/cm²·sec, a bending resistance of 18/17, and an elastic recovery ratio of 52% was prepared. Moreover, the surface layer web, the inner layer web, and the lower layer web for (X-4), which were the same as those of Example 8, also were prepared. Then, these webs were laminated and subjected to hydroentanglement under the same conditions as Example 8, except that the plain weave fabric (D-4) was used instead of the plain weave fabric (D-1) as a fiber bundle layer. Thus, a non-woven fabric (X-6) was produced.

Next, as with the production of the substrate (Y-1) for artificial leather from the non-woven fabric (X-1) in Example 1, the non-woven fabric (X-6) was impregnated with a polyurethane solution, coagulated, washed with water and further with hot water (85°C), and dried, resulting in a substrate (Y-6) for artificial leather. Table 5 shows the weight of each layer of the substrate (Y-6), the density of a group of fibers in each layer, and the density of each layer calculated from the thickness.
For the substrate (Y-6), the grain finish was performed under the same conditions as Example 1, thereby producing a grain artificial leather (Z-10). The artificial leather (Z-10) was evaluated under the same conditions as the artificial leather (Z-1). Table 7 shows the results of the evaluation. As is evident from the comparison between the values in Table 7 and the values of the natural leathers in Table 2, the artificial leather (Z-10) had a low bending resistance and a low elastic recovery ratio, and did not have the texture of natural leather.

**TABLE 5**

| | Weight | | | Density of fibers g/cm³ | Thickness mm | Density of layer g/cm³ |
|---|---|---|---|---|---|---|
| | ①PET g/m² | ②PU g/m² | ①+② g/m² | | | |
| Surface layer | 27.0 | 18.0 | 45.0 | 0.216 | 0.125 | 0.360 |
| Inner layer | 25.5 | 17.0 | 42.5 | 0.182 | 0.140 | 0.328 |
| Fiber bundle layer | 48.9 | 9.1 | 58.0 | 0.257 | 0.190 | 0.305 |
| Lower layer | 48.0 | 20.0 | 68.0 | 0.178 | 0.270 | 0.252 |
| Total | 149.4 | 64.1 | 213.5 | | 0.725 | 0.294 |

### Comparative Example 2

A substrate (Y-7) for artificial leather was produced under the same conditions as the substrate (Y-5) for artificial leather, except that a non-woven fabric (X-7) was provided by laminating the inner layer web and the lower layer web in the opposite order and subjecting the laminate to hydroentanglement in Example 8. Table 6 shows the weight of each layer of the substrate (Y-7), the density of a group of fibers in each layer, and the density of each layer calculated from the thickness.
For the substrate (Y-7), the grain finish was performed under the same conditions as Example 1, thereby producing a grain artificial leather (Z-11). The artificial leather (Z-11) was evaluated under the same conditions as the artificial leather (Z-1). Table 7 shows the results of the evaluation. As is evident from the comparison between the values in Table 7 and the values of the natural leathers in Table 2, the artificial leather (Z-11) had a low bending resistance and a low elastic recovery ratio, and did not have the texture of natural leather.

**TABLE 6**

| | Weight | | | Density of fibers g/cm³ | Thickness mm | Density of layer g/cm³ |
|---|---|---|---|---|---|---|
| | ①PET g/m² | ②PU g/m² | ①+② g/m² | | | |
| Surface layer | 27.1 | 18.2 | 45.3 | 0.226 | 0.120 | 0.378 |
| Inner layer | 48.1 | 21.0 | 69.0 | 0.175 | 0.275 | 0.251 |
| Fiber bundle layer | 50.0 | 8.2 | 58.2 | 0.263 | 0.190 | 0.306 |
| Lower layer | 25.5 | 19.2 | 44.7 | 0.196 | 0.130 | 0.344 |
| Total | 150.7 | 66.6 | 217.2 | | 0.715 | 0.304 |

**TABLE 7**

| | | Z-8 | Z-9 | Z-10 | Z-11 |
|---|---|---|---|---|---|
| Thickness mm | | 0.86 | 0.87 | 0.81 | 0.88 |
| Bending resistance mm | | 48 | 47 | 34 | 36 |
| 1 mm thickness conversion | | 55.8 | 54 | 41.9 | 40.9 |
| Resilience | Crease recovery angle | 112° | 103° | 69° | 78° |
| | Recovery ratio | 62% | 57% | 38% | 43% |
| 10% modulus Pa (kgf/mm²) | | 1.08 (0.11) | 0.98 (0.1) | 0.59 (0.06) | 0.68 (0.07) |
| 1 mm thickness conversion Pa (kgf/mm²) | | 1.254 (0.128) | 1.027 (0.115) | 0.725 (0.074) | 0.774 (0.079) |

### Example 9

### [Production of a substrate for artificial leather]

80 parts of polyester fibers (manufactured by Teijin Limited) having a fineness of 0.11 decitex (0.1 denier) and a fiber length of 3 mm as primary fibers and 20 parts of undrawn polyester fibers (manufactured by Teijin Limited) having a fineness of 0.22 decitex (0.2 denier) and a fiber length of 3 mm as secondary fibers were dissolved in water, and a 1% nonionic dispersant and 0.1% polyacrylamide were added in the same manner as Example 1, thus providing a first slurry for papermaking.
75 parts of polyester fibers (manufactured by Teijin Limited) having a fineness of 0.33 decitex (0.3 denier) and a fiber length of 3 mm as primary fibers, 15 parts of undrawn polyester fibers (manufactured by Teijin Limited) having a fineness of 0.56 decitex (0.5 denier) and a fiber length of 3 mm as secondary fibers, and 10 parts of VPB were dissolved in the same manner as the first slurry, thus providing a second slurry for papermaking.
75 parts of polyester fibers (manufactured by Teijin Limited) having a fineness of 0.67 decitex (0.6 denier) and a fiber length of 5 mm as primary fibers, 10 parts of undrawn polyester fibers (manufactured by Teijin Limited) having a fineness of 1.22 decitex (1.1 denier) and a fiber length of 3 mm as secondary fibers, and 15 parts of VPB were dissolved in the same manner as the first slurry, thus providing a third slurry for papermaking.
70 parts of polyester fibers (manufactured by Teijin Limited) having a fineness of 1.67 decitex (1.5 denier) and a fiber length of 5 mm as primary fibers, 10 parts of undrawn polyester fibers (manufactured by Teijin Limited) having a fineness of 1.22 decitex (1.1 denier) and a fiber length of 5 mm as secondary fibers, and 20 parts of VPB were dissolved in the same manner as the first slurry, thus providing a fourth slurry for papermaking.

The first, second, third, and fourth slurries were formed into a surface layer web with a dry weight (basis weight) of 30 g/m², an inner layer web with a dry weight (basis weight) of 30 g/m², a lower layer web for (X-8) with a dry weight (basis weight) of 50 g/m², and a lower layer web for (X-9) with a dry weight (basis weight) of 50 g/m² by papermaking using an inclined-type paper machine, respectively.
On the other hand, the polyester plain weave fabric (D-1) used in Example 1 was prepared.
The surface layer web, the inner web, the plain weave fabric (D-1), and one of the lower layer webs were laminated in this order from the top, and then subjected to hydroentanglement at ordinary temperatures by applying water jets alternately to the surface and the back of the laminate while varying the injection pressure in the range of 9.8 x 10⁵ Pa to 1.96 x 10⁷ Pa (10 kg/cm² to 200 kg/cm²) Thus, a non-woven fabric (X-8) and a non-woven fabric (X-9) were produced.
Next, as with the production of the substrate (Y-1) for artificial leather from the non-woven fabric (X-1) in Example 1, the non-woven fabrics (X-8) and (X-9) were impregnated with a polyurethane solution, coagulated, washed with water and further with hot water (85°C), and dried, resulting in substrates (Y-8) and (Y-9) for artificial leather, respectively. Table 8 shows the weight of each layer of the substrates (Y-8) and (Y-9), and the density of each layer calculated from the thickness.

**TABLE 8**

| | | Weight | | | Density of fibers g/cm³ | Thickness mm | Density of layer g/cm³ |
|---|---|---|---|---|---|---|---|
| | | ①PET g/m² | ②PU g/m² | ①+② g/m² | | | |
| Surface layer | | 30.0 | 15.5 | 45.5 | 0.250 | 0.120 | 0.379 |
| Inner layer | | 27.0 | 15.2 | 42.2 | 0.200 | 0.135 | 0.313 |
| Fiber bundle layer | | 50.0 | 8.3 | 58.3 | 0.263 | 0.190 | 0.308 |
| Lower layer | (X-8) | 42.5 | 21.5 | 64.2 | 0.173 | 0.245 | 0.252 |
| | (X-9) | 40.0 | 22.9 | 62.9 | 0.167 | 0.240 | 0.262 |
| Total | (X-8) | 149.5 | 60.5 | 210.2 | | 0.690 | 0.305 |
| | (X-9) | 147.0 | 61.9 | 208.9 | | 0.685 | 0.305 |

For each of the substrates (Y-8) and (Y-9), the grain finish was performed under the same conditions as Example 1, thereby producing grain artificial leathers (Z-12) and (Z-13). The artificial leathers (Z-12) and (Z-13) were evaluated under the same conditions as the artificial leather (Z-1). Table 9 shows the results of the evaluation. As is evident from the comparison between the values in Table 9 and the values of the natural leathers in Table 2, both the artificial leathers (Z-12) and (Z-13) had a high bending resistance and a high elastic recovery ratio, and also had the same texture as that of natural leather.

**TABLE 9**

| | | Z-12 | Z-13 |
|---|---|---|---|
| Thickness mm | | 0.83 | 0.83 |
| Bending resistance mm | | 51 | 54 |
| 1 mm thickness conversion | | 61.4 | 65.1 |
| Resilience | Crease recovery angle (degree) | 117 | 120 |
| | Recovery ratio (%) | 65 | 67 |
| 10% modulus Pa (kgf/mm²) | | 0.98 0.10 | 1.08 0.11 |
| 1 mm thickness conversion Pa (kgf/mm²) | | 1.176 0.120 | 1.303 0.133 |

### Example 10

Non-woven fabrics (X-10) and (X-11) were provided under the same conditions as the non-woven fabrics (X-4) and (X-5) in Example 8, except that the laminate was immersed in a hot water bath at 40°C for 3 seconds before the hydroentanglement. The bending resistance, surface friction coefficient (referred to as "MIU" in the following), and standard deviation (referred to as "MMD" in the following) of each of the non-woven fabrics (X-10) and (X-11) were measured. Table 10 shows the results of the measurement along with those of the non-woven fabrics (X-4) and (X-5) for comparison. In this case, the friction coefficient and the standard deviation were determined by winding a piano wire with a diameter of 0.5 mm around a terminal (plane area: 1 x 1 cm), imposing a load of 50 g on the terminal, and sliding this terminal on the surface of the non-woven fabric at a speed of 1 mm/sec, so that the average value of the friction coefficients in a distance of 20 mm and its standard deviation were calculated.

**TABLE 10**

| | X-4 | X-10 | X-5 | X-11 |
|---|---|---|---|---|
| Bending resistance mm (1 mm thickness conversion) | 70 | 41 | 77 | 43 |
| MIU | 0.249 | 0.228 | 0.281 | 0.249 |
| MMD | 0.0089 | 0.0045 | 0.0092 | 0.0069 |

As can be seen from Table 10, the non-woven fabrics (X-10) and (X-11) were smoother and softer than the non-woven fabrics (X-4) and (X-5).

## Claims

1. A substrate for artificial leather comprising:
an upper layer that has a density of 0.30 to 0.45 g/cm³ and comprises a group of fibers having a fineness of 1.1 decitex (1 denier) or less, a fiber length of 3 to 15 mm, and a basis weight of 20 to 150 g/m² and an elastic polymer impregnated into the group of fibers;
a fiber bundle layer that has a density of 0.25 to 0.35 g/cm³ and comprises fibers having a fineness of 1.1 decitex (1 denier) or more and a fabric having an air permeability of 3 to 250 cm³/cm²·sec based on JIS (Japanese Industrial Standards) L 1096 Method A; and
a lower layer that has a density lower than that of the upper layer and in a range of 0.20 to 0.35 g/cm³ and comprises a group of fibers having a fineness greater than that of the upper layer, a fiber length of 5 to 25 mm, and a basis weight of 50 to 200 g/m² and an elastic polymer impregnated into the group of fibers,
wherein the upper layer, the fiber bundle layer, and the lower layer are laminated and entangled with one another.

2. The substrate for artificial leather according to claim 1, wherein the upper layer comprises a surface layer that has a density of 0.35 to 0.45 g/cm³ and comprises a group of fibers having a fineness of 1.1 decitex (1 denier) or less, a fiber length of 3 to 10 mm, and a basis weight of 20 to 100 g/m² and an elastic polymer impregnated into the group of fibers, and
an inner layer that has a density lower than that of the surface layer and in a range of 0.30 to 0.40 g/cm³ and comprises a group of fibers having a fineness not less than that of the surface layer, a fiber length of 3 to 15 mm, and a basis weight of 30 to 150 g/m² and an elastic polymer impregnated into the group of fibers.

3. The substrate for artificial leather according to claim 2, wherein the group of fibers in the surface layer has a density of 0.18 to 0.30 g/cm³, the group of fibers in the inner layer has a density of 0.15 to 0.25 g/cm³, and the group of fibers in the lower layer has a density of 0.15 to 0.23 g/cm³.

4. The substrate for artificial leather according to claim 1, wherein at least one of the group of fibers in the upper layer and the group of fibers in the lower layer comprises 70 parts or more of primary fibers having a relatively high softening point SH and 5 parts or more of secondary fibers having a relatively low softening point SL.

5. The substrate for artificial leather according to claim 1, wherein the fabric has the following physical properties:
a bending resistance indicated by an average of values in longitudinal and lateral directions based on JIS L 1096 8.19 Method A (1 mm thickness conversion) is 30 mm or more; and
an elastic recovery ratio at a load of 10N measured by a Monsanto method based on JIS L 1059-1 is 50% or more.

6. The substrate for artificial leather according to claim 1, wherein the fabric has a bending resistance of 45 mm or more and an elastic recovery ratio of 75% or more.

7. The substrate for artificial leather according to claim 2, wherein the fineness of the group of fibers in the surface layer is 0.056 to 0.61 decitex (0.05 to 0.6 denier)

8. An artificial leather comprising the substrate according to any one of claims 1 to 7, wherein the surface of the upper layer is napped.

9. An artificial leather comprising the substrate according to any one of claims 1 to 7, wherein a sheet that includes polyurethane as the main component is bonded to the surface of the upper layer.

10. A method for manufacturing a substrate for artificial leather comprising:
laminating an upper layer web, a fabric, and a lower layer web in the indicated order;
subjecting the resultant laminate to hydroentanglement to form a non-woven fabric; and
impregnating the non-woven fabric with an elastic polymer solution,
wherein the upper layer web is obtained by wet papermaking and drying, and comprises a group of fibers having a fineness of 1.1 decitex (1 denier) or less, a fiber length of 3 to 15 mm, and a basis weight of 20 to 150 g/m² and a water-soluble polymer,
the fabric comprises fibers having a fineness of 1.1 decitex (1 denier) or more and has an air permeability of 3 to 250 cm³/cm²·sec based on JIS L 1096 Method A, and
the lower layer web is obtained by wet papermaking and drying, and comprises a group of fibers having a fineness greater than that of the upper layer web, a fiber length of 5 to 25 mm, and a basis weight of 50 to 200 g/m² and a water-soluble polymer filled into the lower layer web at a density higher than that of the upper layer web.

11. The method according to claim 10, wherein the watersoluble polymer comprises two types of water-soluble polymers: one having a relatively low dissolution temperature (DL) in water and a relatively low redissolution temperature (RL) in water; and the other having a relatively high dissolution temperature (DH) in water and a relatively high redissolution temperature (RH) in water, and
wherein the hydroentanglement is performed at a temperature of not more than DL, and the non-woven fabric is washed with hot water at a temperature of not less than RH after the impregnation of the non-woven fabric with the elastic polymer solution.

12. The method according to claim 10, wherein the upper layer web comprises a surface layer web that is obtained by wet papermaking and drying, and comprises a group of fibers having a fineness of 1.1 decitex (1 denier) or less, a fiber length of 3 to 10 mm, and a basis weight of 20 to 100 g/m² and a watersoluble polymer, and
an inner layer web that is obtained by wet papermaking and drying, and comprises a group of fibers having a fineness not less than that of the surface layer web, a fiber length of 3 to 15 mm, and a basis weight of 30 to 150 g/m² and a water-soluble polymer filled into the inner layer web at a density higher than that of the surface layer web.

13. The method according to claim 12, wherein the group of fibers in the surface layer web has a density of 0.18 to 0.30 g/cm³, the group of fibers in the inner layer web has a density of 0.15 to 0.25 g/cm³, and the group of fibers in the lower layer web has a density of 0.15 to 0.23 g/cm³.

14. The method according to claim 10, wherein at least one of the group of fibers in the upper layer web and the group of fibers in the lower layer web comprises 70 parts or more of primary fibers having a relatively high softening point SH and 5 parts or more of secondary fibers having a relatively low softening point SL, and
the drying after the wet papermaking is performed at a temperature between SL and SH.

15. The method according to claim 10, wherein the fabric has the following physical properties:
a bending resistance indicated by an average of values in longitudinal and lateral directions based on JIS L 1096 8.19 Method A (1 mm thickness conversion) is 30 mm or more; and
an elastic recovery ratio at a load of 10N measured by a Monsanto method based on JIS L 1059-1 is 50% or more.

16. The method according to claim 10, wherein the fabric has a bending resistance of 45 mm or more and an elastic recovery ratio of 75% or more.

17. The method according to claim 12, wherein the fineness of the group of fibers in the surface layer web is 0.056 to 0.67 decitex (0.05 to 0.6 denier)

18. The method according to claim 10, wherein before performing the hydroentanglement, the laminate is immersed in a water bath at approximately the same temperature or more as a water temperature of the hydroentanglement.

19. A method for manufacturing an artificial leather comprising:
napping the surface of the upper layer of the substrate for artificial leather according to any one of claims 10 to 18.

20. A method for manufacturing an artificial leather comprising:
bonding a sheet that includes polyurethane as the main component to the surface of the upper layer of the substrate for artificial leather according to any one of claims 10 to 18.

## Patentansprüche

1. Ein Substrat für Kunstleder, umfassend:
eine obere Schicht, die eine Dichte von 0,30 bis 0,45 g/cm³ aufweist und eine Gruppe von Fasern mit einer Feinheit von 1,1 dtex (1 Denier) oder weniger, einer Faserlänge von 3 bis 15 mm und einem Flächengewicht von 20 bis 150 g/m² und ein in die Gruppe von Fasern imprägniertes elastisches Polymer umfasst;
eine Faserbündelschicht, die eine Dichte von 0,25 bis 0,35 g/cm³ aufweist und Fasern mit einer Feinheit von 1,1 dtex (1 Denier) oder mehr und einen Textilstoff mit einer Luftdurchlässigkeit von 3 bis 250 cm³/cm²·s, basierend auf JIS (japanische Industrienormen (Japanese Industrial Standards)) L 1096 Verfahren A, umfasst; und
eine untere Schicht, die eine Dichte aufweist, die niedriger ist als die der oberen Schicht und in einem Bereich von 0,20 bis 0,35 g/cm³ liegt, und eine Gruppe von Fasern mit einer Feinheit, die höher ist als die der oberen Schicht, einer Faserlänge von 5 bis 25 mm und einem Flächengewicht von 50 bis 200 g/m² und ein in die Gruppe von Fasern imprägniertes elastisches Polymer umfasst,
wobei die obere Schicht, die Faserbündelschicht und die untere Schicht laminiert und miteinander verwickelt (entangled) sind.

2. Das Substrat für Kunstleder nach Anspruch 1, wobei die obere Schicht eine Oberflächenschicht, die eine Dichte von 0,35 bis 0,45 g/cm³ aufweist und eine Gruppe von Fasern mit einer Feinheit von 1,1 dtex (1 Denier) oder weniger, einer Faserlänge von 3 bis 10 mm und einem Flächengewicht von 20 bis 100 g/m² und ein in die Gruppe von Fasern imprägniertes elastisches Polymer umfasst, und
eine innere Schicht umfasst, die eine Dichte aufweist, die niedriger ist als die der Oberflächenschicht und in einem Bereich von 0,30 bis 0,40 g/cm³ liegt, und eine Gruppe von Fasern mit einer Feinheit, die nicht niedriger ist als die der Oberflächenschicht, einer Faserlänge von 3 bis 15 mm und einem Flächengewicht von 30 bis 150 g/m² und ein in die Gruppe von Fasern imprägniertes elastisches Polymer umfasst.

3. Das Substrat für Kunstleder nach Anspruch 2, wobei die Gruppe von Fasern in der Oberflächenschicht eine Dichte von 0,18 bis 0,30 g/cm³ aufweist, die Gruppe von Fasern in der inneren Schicht eine Dichte von 0,15 bis 0,25 g/cm³ aufweist und die Gruppe von Fasern in der unteren Schicht eine Dichte von 0,15 bis 0,23 g/cm³ aufweist.

4. Das Substrat für Kunstleder nach Anspruch 1, wobei mindestens eine aus der Gruppe von Fasern in der oberen Schicht und der Gruppe von Fasern in der unteren Schicht 70 Teile oder mehr Primärfasern mit einem relativ hohen Erweichungspunkt SH und 5 Teile oder mehr Sekundärfasern mit einem relativ niedrigen Erweichungspunkt SL umfasst.

5. Das Substrat für Kunstleder nach Anspruch 1, wobei das Gewebe die folgenden physikalischen Eigenschaften aufweist:
eine Biegefestigkeit, angegeben durch ein Mittel von Werten in Längs- und Querrichtung,
basierend auf JIS L 1096 8.19 Verfahren A (1 mm Dicke Umrechnung), beträgt 30 mm oder mehr; und
ein elastischer Erholungsgrad bei einer Last von 10 N, gemessen durch ein Monsanto-Verfahren basierend auf JIS L 1059-1, beträgt 50% oder mehr.

6. Das Substrat für Kunstleder nach Anspruch 1, wobei das Gewebe eine Biegefestigkeit von 45 mm oder mehr und einen elastischen Erholungsgrad von 75% oder mehr aufweist.

7. Das Substrat für Kunstleder nach Anspruch 2, wobei die Feinheit der Gruppe von Fasern in der Oberflächenschicht 0,056 bis 0,67 dtex (0,05 bis 0,6 Denier) beträgt.

8. Ein Kunstleder, umfassend das Substrat nach einem der Ansprüche 1 bis 7, wobei die Oberfläche der oberen Schicht aufgeraut ist.

9. Ein Kunstleder, umfassend das Substrat nach einem der Ansprüche 1 bis 7, wobei ein Bahnenmaterial, das Polyurethan als Hauptbestandteil beinhaltet, an der Oberfläche der oberen Schicht befestigt ist.

10. Ein Verfahren zur Herstellung eines Substrats für Kunstleder, umfassend:
Laminieren einer Bahn einer oberen Schicht, eines Textilstoffes und einer Bahn einer unteren Schicht in der angegebenen Reihenfolge;
Unterziehen des resultierenden Laminats einer Wasserstrahlverwickelung (hydroentanglement), um ein Vlies zu bilden; und
Imprägnieren des Vlieses mit einer Lösung eines elastischen Polymers,
wobei die Bahn der oberen Schicht durch nasse Papierherstellung und Trocknen erhalten wird und eine Gruppe von Fasern mit einer Feinheit von 1,1 dtex (1 Denier) oder weniger, einer Faserlänge von 3 bis 15 mm und einem Flächengewicht von 20 bis 150 g/m² und ein wasserlösliches Polymer umfasst,
der Textilstoff Fasern mit einer Feinheit von 1,1 dtex (1 Denier) oder mehr umfasst und eine Luftdurchlässigkeit von 3 bis 250 cm³/cm²·s, basierend auf JIS L 1096 Verfahren A, aufweist und
die Bahn der unteren Schicht durch nasse Papierherstellung und Trocknen erhalten wird und eine Gruppe von Fasern mit einer Feinheit, die höher ist als die der Bahn der oberen Schicht, einer Faserlänge von 5 bis 25 mm und einem Flächengewicht von 50 bis 200 g/m² und ein in die Bahn der unteren Schicht gefülltes wasserlösliches Polymer mit einer Dichte, die höher ist als die der Bahn der oberen Schicht, umfasst.

11. Das Verfahren nach Anspruch 10, wobei das wasserlösliche Polymer zwei Arten von wasserlöslichen Polymeren umfasst, wobei eines eine relativ niedrige Lösungstemperatur (DL) in Wasser und eine relativ niedrige erneute Lösungstemperatur (RL) in Wasser aufweist; und das andere eine relativ hohe Lösungstemperatur (DH) in Wasser und eine relativ hohe erneute Lösungstemperatur (RH) in Wasser aufweist, und
wobei die Wasserstrahlverwickelung (hydroentanglement) bei einer Temperatur von nicht mehr als DL durchgeführt wird und das Vlies mit heißem Wasser bei einer Temperatur von nicht weniger als RH nach dem Imprägnieren des Vlieses mit der Lösung eines elastischen Polymers gewaschen wird.

12. Das Verfahren nach Anspruch 10, wobei die Bahn der oberen Schicht eine Bahn einer Oberflächenschicht, die durch nasse Papierherstellung und Trocknen erhalten wird und eine Gruppe von Fasern mit einer Feinheit von 1,1 dtex (1 Denier) oder weniger, einer Faserlänge von 3 bis 10 mm und einem Flächengewicht von 20 bis 100 g/m² und ein wasserlösliches Polymer umfasst und
eine Bahn einer inneren Schicht umfasst, die durch nasse Papierherstellung und Trocknen erhalten wird und eine Gruppe von Fasern mit einer Feinheit, die nicht geringer ist als die der Bahn der Oberflächenschicht, einer Faserlänge von 3 bis 15 mm und einem Flächengewicht von 30 bis 150 g/m² und ein in die Bahn der inneren Schicht gefülltes wasserlösliches Polymer mit einer Dichte, die höher ist als die der Bahn der Oberflächenschicht, umfasst.

13. Das Verfahren nach Anspruch 12, wobei die Gruppe von Fasern in der Bahn der Oberflächenschicht eine Dichte von 0,18 bis 0,30 g/cm³ aufweist, die Gruppe von Fasern in der Bahn der inneren Schicht eine Dichte von 0,15 bis 0,25 g/cm³ aufweist und die Gruppe von Fasern in der Bahn der unteren Schicht eine Dichte von 0,15 bis 0,23 g/cm³ aufweist.

14. Das Verfahren nach Anspruch 10, wobei mindestens eine aus der Gruppe von Fasern in der Bahn der oberen Schicht und der Gruppe von Fasern in der Bahn der unteren Schicht 70 Teile oder mehr Primärfasern mit einem relativ hohen Erweichungspunkt SH und 5 Teile oder mehr Sekundärfasern mit einem relativ niedrigen Erweichungspunkt SL umfasst und
das Trocknen nach der nassen Papierherstellung bei einer Temperatur zwischen SL und SH durchgeführt wird.

15. Das Verfahren nach Anspruch 10, wobei der Textilstoff die folgenden physikalischen Eigenschaften aufweist:
eine Biegefestigkeit, angegeben durch ein Mittel von Werten in Längs- und Querrichtung basierend auf JIS L 1096 8.19 Verfahren A (1 mm Dicke Umrechnung), beträgt 30 mm oder mehr; und
ein elastischer Erholungsgrad bei einer Last von 10 N, gemessen durch ein Monsanto-Verfahren basierend auf JIS L 1059-1, beträgt 50% oder mehr.

16. Das Verfahren nach Anspruch 10, wobei der Textilstoff eine Biegefestigkeit von 45 mm oder mehr und einen elastischen Erholungsgrad von 75% oder mehr aufweist.

17. Das Verfahren nach Anspruch 12, wobei die Feinheit der Gruppe von Fasern in der Bahn der Oberflächenschicht 0,056 bis 0,67 dtex (0,05 bis 0,6 Denier) beträgt.

18. Das Verfahren nach Anspruch 10, wobei das Laminat vor dem Durchführen der Wasserstrahlverwickelung (hydroentanglement) in ein Wasserbad bei etwa der gleichen Temperatur wie eine Wassertemperatur der Wasserstrahlverwickelung (hydroentanglement) oder darüber getaucht wird.

19. Ein Verfahren zur Herstellung eines Kunstleders, umfassend:
Aufrauen der Oberfläche der oberen Schicht des Substrats für Kunstleder nach einem der Ansprüche 10 bis 18.

20. Ein Verfahren zur Herstellung eines Kunstleders, umfassend:
Befestigen eines Bahnenmaterials, das Polyurethan als Hauptbestandteil beinhaltet, an der Oberfläche der oberen Schicht des Substrats für Kunstleder nach einem der Ansprüche 10 bis 18.

## Revendications

1. Substrat pour cuir artificiel comprenant :
une couche supérieure qui présente une densité de 0,30 à 0,45 g/cm³ et comprend un groupe de fibres ayant une finesse de 1,1 déci tex (1 denier) ou inférieure, une longueur de fibre de 3 à 15 mm, et une masse de base de 20 à 150 g/m² et un polymère élastique imprégné dans le groupe de fibres ;
une couche de faisceau de fibres qui présente une densité de 0,25 à 0,35 g/cm³ et comprend des fibres ayant une finesse de 1,1 déci tex (1 denier) ou supérieure et un tissu présentant une perméabilité à l'air de 3 à 250 cm³/cm²·s sur la base de JIS (normes industrielles japonaises) L 1096 Method A ; et
une couche inférieure qui présente une densité inférieure à celle de la couche supérieure et dans un intervalle de 0,20 à 0,35 g/cm³ et comprend un groupe de fibres ayant une finesse supérieure à celle de la couche supérieure, une longueur de fibre de 5 à 25 mm et une masse de base de 50 à 200 g/m² et un polymère élastique imprégné dans le groupe de fibres,
dans lequel la couche supérieure, la couche de faisceau de fibres, et la couche inférieure sont stratifiées et emmêlées les unes avec les autres.

2. Substrat pour cuir artificiel selon la revendication 1, dans lequel la couche supérieure comprend une couche de surface qui présente une densité de 0,35 à 0,45 g/cm³ et comprend un groupe de fibres ayant une finesse de 1,1 déci tex (1 denier) ou inférieure, une longueur de fibre de 3 à 10 mm, et une masse de base de 20 à 100 g/m² et un polymère élastique imprégné dans le groupe de fibres, et
une couche interne qui présente une densité inférieure à celle de la couche de surface et dans un intervalle de 0,30 à 0,40 g/cm³ et comprend un groupe de fibres ayant une finesse d'au moins celle de la couche de surface, une longueur de fibre de 3 à 15 mm, et une masse de base de 30 à 150 g/m² et un polymère élastique imprégné dans le groupe de fibres.

3. Substrat pour cuir artificiel selon la revendication 2, dans lequel le groupe de fibres dans la couche de surface présente une densité de 0,18 à 0,30 g/cm³, le groupe de fibres dans la couche interne présente une densité de 0,15 à 0,25 g/cm³, et le groupe de fibres dans la couche inférieure présente une densité de 0,15 à 0,23 g/cm³.

4. Substrat pour cuir artificiel selon la revendication 1, dans lequel au moins un du groupe de fibres dans la couche supérieure et du groupe de fibres dans la couche inférieure comprend 70 parties ou plus de fibres primaires ayant un point de ramollissement relativement élevé SH et 5 parties ou plus de fibres secondaires ayant un point de ramollissement relativement faible SL.

5. Substrat pour cuir artificiel selon la revendication 1, dans lequel le tissu présente les propriétés physiques suivantes :
une résistance à la flexion indiquée par une moyenne des valeurs dans les directions longitudinale et latérale basées sur JIS L 1096 8.19 Method A (conversion d'épaisseur de 1 mm) est de 30 mm ou supérieure ; et
un taux de revenu élastique à une charge de 10N mesuré par un procédé Monsanto basé sur JIS L 1059-1 est de 50 % ou supérieur.

6. Substrat pour cuir artificiel selon la revendication 1, dans lequel le tissu présente une résistance à la flexion de 45 mm ou supérieure et un taux de revenu élastique de 75 % ou supérieur.

7. Substrat pour cuir artificiel selon la revendication 2, dans lequel la finesse du groupe de fibres dans la couche de surface est de 0,056 à 0,67 déci tex (0,05 à 0,6 denier).

8. Cuir artificiel comprenant le substrat selon l'une quelconque des revendications 1 à 7, dans lequel la surface de la couche supérieure est grattée.

9. Cuir artificiel comprenant le substrat selon l'une quelconque des revendications 1 à 7, dans lequel une feuille qui comprend du polyuréthane comme constituant principal est liée à la surface de la couche supérieure.

10. Procédé de fabrication d'un substrat pour cuir artificiel comprenant les étapes consistant :
à stratifier une bande de couche supérieure, un tissu, et une bande de couche inférieure dans l'ordre indiqué ;
à soumettre le stratifié résultant à un hydroemmêlement pour former un tissu non tissé ; et
à imprégner le tissu non tissé avec une solution polymère élastique,
dans lequel la bande de couche supérieure est obtenue par fabrication de papier par voie humide et par séchage, et comprend un groupe de fibres ayant une finesse de 1,1 déci tex (1 denier) ou inférieure, une longueur de fibre de 3 à 15 mm, et une masse de base de 20 à 150 g/m² et un polymère soluble dans l'eau,
le tissu comprend des fibres ayant une finesse de 1,1 déci tex (1 denier) ou supérieure et présente une perméabilité à l'air de 3 à 250 cm³/cm²·s basée sur JIS L 1096 Method A, et
la bande de couche inférieure est obtenue par fabrication de papier par voie humide et par séchage, et comprend un groupe de fibres ayant une finesse supérieure à celle de la bande de couche supérieure, une longueur de fibre de 5 à 25 mm, et une masse de base de 50 à 200 g/m² et un polymère soluble dans l'eau chargé dans la bande de couche inférieure à une densité supérieure à celle de la bande de couche supérieure.

11. Procédé selon la revendication 10, dans lequel le polymère soluble dans l'eau comprend deux types de polymères solubles dans l'eau : un présentant une température de dissolution relativement faible (DL) dans l'eau et une température de redissolution relativement faible (RL) dans l'eau ; et l'autre présentant une température de dissolution relativement élevée (DH) dans l'eau et une température de redissolution relativement élevée (RH) dans l'eau, et
dans lequel l'hydroemmêlement, est réalisé à une température d'au plus DL, et le tissu non tissé est lavé avec de l'eau chaude à une température d'au moins RH après l'imprégnation du tissu non tissé avec la solution de polymère élastique.

12. Procédé selon la revendication 10, dans lequel la bande de couche supérieure comprend une bande de couche de surface qui est obtenue par fabrication de papier par voie humide et par séchage, et comprend un groupe de fibres ayant une finesse de 1,1 déci tex (1 denier) ou inférieure, une longueur de fibre de 3 à 10 mm, et une masse de base de 20 à 100 g/m² et un polymère soluble dans l'eau, et
une bande de couche interne qui est obtenue par fabrication de papier par voie humide et par séchage, et comprend un groupe de fibres ayant une finesse d'au moins celle de la bande de couche de surface, une longueur de fibre de 3 à 15 mm, et une masse de base de 30 à 150 g/m² et un polymère soluble dans l'eau chargé dans la bande de couche interne à une densité supérieure à celle de la bande de couche de surface.

13. Procédé selon la revendication 12, dans lequel le groupe de fibres dans la bande de couche de surface présente une densité de 0,18 à 0,30 g/cm³, le groupe de fibres dans la bande de couche interne présente une densité de 0,15 à 0,25 g/cm³, et le groupe de fibres dans la bande de couche inférieure présente une densité de 0,15 à 0,23 g/cm³.

14. Procédé selon la revendication 10, dans lequel au moins un du groupe de fibres dans la bande de couche supérieure et du groupe de fibres dans la bande de couche inférieure comprend 70 parties ou plus de fibres primaires ayant un point de ramollissement relativement élevé SH et 5 parties ou plus de fibres secondaires ayant un point de ramollissement relativement faible SL, et
le séchage après la fabrication de papier par voie humide est réalisé à une température entre SL et SH.

15. Procédé selon la revendication 10, dans lequel le tissu présente les propriétés physiques suivantes :
une résistance à la flexion indiquée par une moyenne des valeurs dans les directions longitudinale et latérale sur la base de JIS L 1096 8.19 Method A (conversion d'épaisseur 1 mm) est de 30 mm ou supérieure ; et
un taux de revenu élastique à une charge de 10 N mesuré par un procédé Monsanto sur la base de JIS L 1059-1 est de 50 % ou supérieur.

16. Procédé selon la revendication 10, dans lequel le tissu présente une résistance à la flexion de 45 mm ou supérieure et un taux de revenu élastique de 75 % ou supérieur.

17. Procédé selon la revendication 12, dans lequel la finesse du groupe de fibres dans la bande de couche de surface est de 0,056 à 0,67 déci tex (0,05 à 0,6 denier).

18. Procédé selon la revendication 10, dans lequel, avant de réaliser l'hydroemmêlement, le stratifié est immergé dans un bain d'eau à une température approximativement égale ou supérieure à la température de l'eau de l'hydroemmêlement.

19. Procédé de fabrication d'un cuir artificiel comprenant :
le grattage de la surface de la couche supérieure du substrat pour cuir artificiel selon l'une quelconque des revendications 10 à 18.

20. Procédé de fabrication d'un cuir artificiel comprenant :
la liaison d'une feuille qui comprend du polyuréthane comme constituant principal à la surface de la couche supérieure du substrat pour cuir artificiel selon l'une quelconque des revendications 10 à 18.
